# EUROPEAN PATENT SPECIFICATION

(11) **EP 0 485 605 B1**
(45) Date of publication and mention of the grant of the patent: **11.10.1995**
(21) Application number: 90908670.4
(22) Date of filing: 30.05.1990
(51) Int. Cl.: B60R 21/16

(54) **AIR BAG UNIT**
LUFTSACKEINRICHTUNG
INSTALLATION DE SECURITE ANTI-COLLISION AVEC COUSSIN PNEUMATIQUE GONFLABLE

(43) Date of publication of application: 20.05.1992
(73) Proprietor: TAKATA KABUSHIKI KAISHA, Minato-ku, Tokyo 106 (JP)
(72) Inventor: NAKAJIMA, Hideo, 915-29, Hida-cho, Shiga 521-11 (JP)
(74) Representative: Bubb, Antony John Allen
(86) International application number: JP9000697
(87) International publication number: WO9118762

(56) References cited:
- FR-A- 2 652 789
- JP-U-49 139 747
- JP-U-63 123 354
- JP-Y- 0 523 229
- JP-Y- 4 740 408
- US-A- 3 799 573
- US-A- 4 830 401

## Description

The present invention relates to an air bag unit for protecting an occupant in a vehicle by inflating an air bag by high pressure gas when the vehicle is collided, and in particular to an air bag in an air bag unit to be mounted on an inflator, which blows out gas in the direction perpendicular to the direction toward the occupant.

The air bag unit installed on the fixed portion of a car body in front of the seat in a vehicle plays an important role in the protection of the occupant from injury due to the collision against car body by instantaneously inflating with the pressure of combustion gas released from an inflator, which is fixed on steering wheel or dashboard in an emergency such as vehicle collision.

There is known an air bag manufactured by the present Applicant and having the features of the preamble to Claim 1.

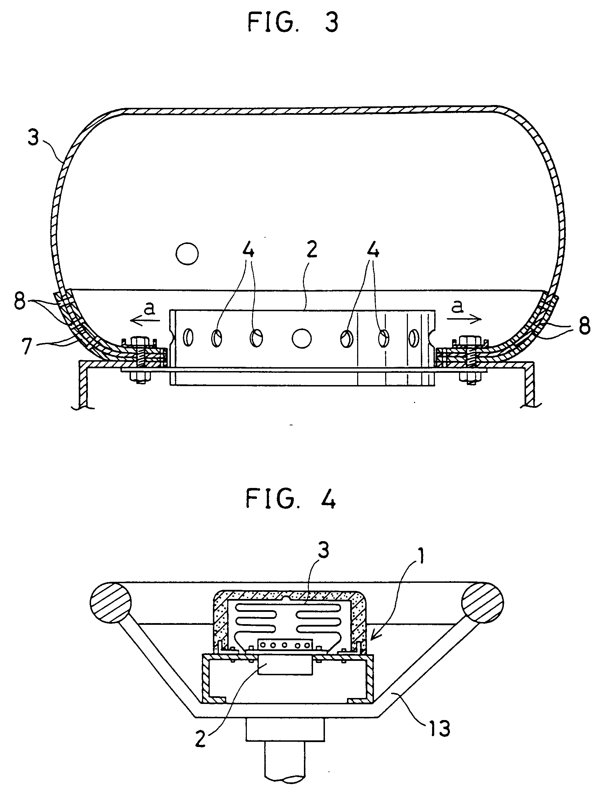

As shown in Fig. 3 and Fig. 4, such air bag unit comprises an inflator 2 which explodes gas generating agent by collision signal from collision detecting sensor (not shown) when the deceleration of the vehicle exceeds a certain level and blows out the gas, and an air bag with its base fixed on said inflator 2 is inflated by the blown gas thus blown out. This air bag unit 1 is installed, for example, on the fixed portion of car body such as the central portion of the steering wheel 13 with the air bag a folded up and placed in a pad.

When the vehicle is collided, the gas generating agent in the inflator 2 is exploded, and the generated gas is blown into the air bag 3 from the blowing holes 4 as shown in Fig. 3. As the result, the air bag 3 is instantaneously inflated and expanded.

Therefore, the air bag 3 receives the occupant, who is pushed forward by inertia and protects the occupant from the collision against car body.

The air bag 3 of this type must have considerable strength on the portion to be connected to the fixed part of the car body because tensile force caused by the pressure of combustion gas and inertia of the occupant are applied on it when inflating.

For this reason, in a conventional type air bag unit 1, the mounting base of the air bag 3 is strengthened by reinforcement cloth 7 as shown in Fig. 3. The reinforcement cloth 7 is usually made of the same material as that of the air bag 3. Further, the reinforcement cloth 7 is overlapped on the air bag 3 and is integrally sewn 8 or bonded with it.

When such air bag 3 is mounted on the inflator 2, it is mounted as if it encloses gas blowing holes 4 on the inflator 2. On the other hand, the gas coming out of the gas blowing holes 4 of the inflator 2 is high temperature and high pressure gas. In this case, gas blowing holes 4 are provided in such manner that gas is blown out in the direction perpendicular to the direction of the occupant. As the result, when high temperature and high pressure gas is blown out of the gas blowing holes 4, the gas directly hits the mounting portion of the air bag 3.

When hot gas directly hits the mounting base of the air bag 3, it also directly hits the sewing threads 8 of the reinforcement cloth 7, which is within the area exposed to the gas. Direct contact of such hot gas may result in the melting of sewing threads by heat of the gas because the threads are not heat-resistant. As the result, the reinforcement cloth 7 is partially separated from the air bag 3 and cannot fulfill the function to reinforce the air bag 3.

Further, there have been proposed several methods to solve the above problems: heat-resistant coating on inner side of base cloth of the air bag, or spraying of silicone rubber on the sewing threads. These methods lead, however, to the increased weight of base cloth of air bag 3 or to more complicated manufacturing processes.

It is an object of the invention to overcome, or at least to reduce problems outlined above.

This object is achieved by the features of Claim 1.

According to the air bag of this invention with the above arrangement, hot gas blown out of the gas blowing holes of the inflator directly hits the flame-proof cloth. As the result, the flame-proof cloth serves as a shield, and the hot gas immediately after blowing out does not hit the portion where the reinforcement cloth of air bag is sewn up. Accordingly, the sewing threads or adhesive agent to fix the reinforcement cloth are not melted. When the air bag is inflated and expanded, the reinforcement cloth is perfectly fixed on the air bag, and it can fulfill the function to strengthen the air bag.

Moreover, by providing the flame-proof cloth, there is no need to spray silicone rubber on the sewing threads, and the manufacturing process can be simplified. Because the portion around exhaust holes can be strengthened by the flame-proof cloth, the number of the reinforcement cloths can be reduced.

### BRIEF DESCRIPTION OF THE DRAWINGS

Fig. 1 is a cross-sectional view of an embodiment of the air bag of the present invention when it is inflated and expanded;
Fig. 2 is a cross-sectional view of the same air bag;
Fig. 3 is a cross-sectional view similar to Fig. 1 of a conventional type air bag; and
Fig. 4 is a schematical cross-sectional view showing an example when the air bag unit is mounted in steering wheel.

### DETAILED DESCRIPTION OF THE PREFERRED EMBODIMENT

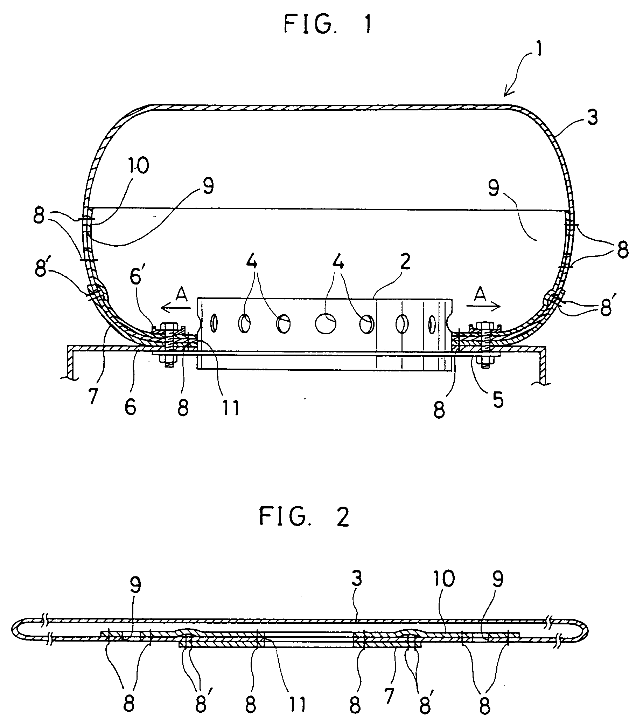

As shown in Fig. 1, the air bag unit 1 comprises an inflator 2 and an air bag 3. The inflator 2 is formed in thin cylindrical shape with gas generating agent sealed in it. On its lateral side, a plurality of gas blowing holes 4, are provided in peripheral direction with adequate spacings.

On outer periphery of the inflator 2, a flange 5 is provided outside the gas blowing holes 4, and this flange 5 is mounted on an air bag holder 6. The base of the air bag 3 is fixed in the holder 6 so that the gas blowing holes 4, are enclosed by the air bag 3.

As shown in Fig. 2, the air bag 3 is made of flexible and airtight material, which is a woven cloth coated with rubber or synthetic resin, and the mounting base is reinforced by overlapping the reinforcement cloth 7 and by integrally sewing it with sewing threads 8.

Also, exhaust holes 9 are formed in radial direction on the peripheral portion of the mount of the air bag 3. On inner side of the base of the air bag 3, flame-proof cloth 10 is provided to cover the sewing threads 8' of the reinforcement cloth 7 in the area which is directly exposed to the blown gas from inflator 2. This flame-proof cloth 10 prevents hot gas flow A blown out of the inflator 2 from directly hitting the sewing threads 8' of the reinforcement cloth 7. Thus, the melting of the sewing threads 8' which fixes the reinforcement cloth 7 on the air bag 3 is prevented.

Also, the flame-proof cloth 10 reinforces the exhaust holes 9 as it is sewn on the portion not directly exposed to hot gas, i.e. peripheral portion around the opening 11 where inflator 2 is mounted, the portion around the exhaust holes 9, and the end of the flame-proof cloth 10. The base of the air bag 3, the flame-proof cloth 10 and the reinforcement cloth 7 are airtightly connected to the inflator 2 by bolts and nuts by overlapping the inner periphery and by squeezing with ring-like hardware 6' and the holder 6.

The air bag unit 1 with such arrangement is mounted, for example, on the central portion of steering wheel with the air bag 3 folded up and placed in a pad as in the conventional case shown in Fig. 4.

Next, description is given on the operation of this embodiment.

When the vehicle is collided against an obstacle and its deceleration exceeds a certain level, collision detecting sensor (not shown) issues collision signal, and the gas generating agent in the inflator 2 is exploded by this signal. As the result, gas is generated, and the generated gas is blown out of the blowing holes as shown by the arrow A in Fig. 1.

The gas thus blown out strikes the wall of the flame-proof cloth 10 placed face-to-face to the blowing holes 4, and the air bag 3 is instantaneously inflated and expanded. The inflated air bag 3 receives the occupant, who is pushed forward by inertia. In this case, gas is released at adequate speed from the exhaust holes 9 on the air bag 3. This alleviates the shock applied on the occupant, who is collided against the air bag 3.

When hot gas is blown out of the gas blowing holes 4 of the inflator 2, the flame-proof cloth 10 serves as a shield against hot gas, and the hot gas does not hit directly the sewing threads 8' of the reinforcement cloth 7 of the air bag 3. As the result, the melting of the sewing threads 8' can be perfectly prevented.

Because the flame-proof cloth 10 is fixed on the air bag 3 by sewing threads 8 at the points which are not directly exposed to hot gas, the flame-proof cloth 10 is not detached from the air bag 3, and the air bag 3 is reinforced by the flame-proof cloth 10.

In the above embodiment, the reinforcement cloth 7 is fixed on the air bag 3 by the sewing threads 8', whereas the reinforcement cloth 7 may be fixed on the air bag 3 by means of adhesive agent.

### APPLICABILITY IN THE INDUSTRY

The air bag of the air bag unit according to the present invention can be used on a vehicle and applied for protecting the occupant of the vehicle by absorbing the shock, which occurs when the vehicle is collided.

## Claims

1. An air bag (1) for a vehicular passenger restraint system, comprising;
an air bag (3) made of flexible material and having a peripheral portion forming a mounting base;
a reinforcement cloth (7) covering at least a part of said peripheral portion of said air bag (3); and
means (8) securing said reinforcement cloth (7) to said air bag; characterised in that
a flame-proof cloth (10) is disposed internally of said air bag and arranged to cover said means (8) securing said reinforcement cloth (7) to said air bag (3).

2. An air bag as claimed in Claim 1, wherein said reinforcement cloth (7) is arranged externally of said peripheral portion of said air bag (3) and is secured thereto by sewn threads (8') passing through the wall of the air bag (3), and said flame-proof cloth (10) is arranged to overlie the internal wall of the air bag (3) in the region of the sewn thread (8') in order to cover the latter.

3. An air bag as claimed in Claim 1 or 2, wherein said flame-proof cloth (10) is also secured to said air bag (3) to form a reinforcing cloth.

4. An air bag as claimed in Claims 2 and 3, wherein said flame-proof cloth (10) extends away from said mounting base for a greater distance than said reinforcement cloth (7) and is secured to said air bag (3) by sewn threads (8) at points more remote from said mounting base than the sewn threads (8') securing the reinforcement cloth.

5. An air bag unit for a vehicle, comprising:
an inflator (2) having a plurality of holes (4) for directing a gas radially outwardly; and an air bag (1) as claimed in any one of Claims 1-4 with said mounting base secured to and surrounding said inflator (2) whereby said flame-proof cloth (10) is disposed opposite to said plurality of holes (4).

## Patentansprüche

1. Luftsackeinrichtung (1) für ein Passagierrückhaltesystem in einem Fahrzeug, umfassend:
einen Luftsack aus flexiblem Material mit einem eine Montagebasis bildenden Randabschnitt,
ein Verstärkungstuch (7), das wenigstens einen Teil des genannten Randabschnitts des Luftsacks (3) überdeckt, und
Einrichtungen (8) zur Halterung des Verstärkungstuchs (7) am Luftsack, dadurch gekennzeichnet, daß innerhalb des Luftsacks ein feuerfestes Tuch (10) angeordnet ist, um die genannten Einrichtungen (8) zur Befestigung des Verstärkungstuchs (7) am Luftsack (3) zu überdecken.

2. Luftsackeinrichtung nach Anspruch 1, bei welcher das Verstärkungstuch (7) außerhalb des peripheren Abschnitts des Luftsacks (3) angeordnet und daran durch einen Nähfaden gesichert ist, der durch die Wand des Luftsacks (3) verläuft, und das feuerfeste Tuch (10) so angeordnet ist, daß es die Innenwand des Luftsacks (3) im Bereich der Nähte (8') überlagert, um diese zu überdecken.

3. Luftsackeinrichtung nach Anspruch 1 oder 2, bei der das feuerfeste Tuch (10) ebenfalls am Luftsack (3) zur Bildung eines Verstärkungstuchs befestigt ist.

4. Luftsackeinrichtung nach Anspruch 2 oder 3, bei der sich das feuerfeste Tuch (10) von der Montagebasis her über einen größeren Abstand erstreckt als das Verstärkungstuch (8), und am Luftsack (3) durch Nähte (8) an Stellen befestigt ist, die weiter von der Montagebasis abliegen als die Nähte (8') zur Befestigung des Verstärkungstuchs.

5. Luftsackeinrichtung für ein Fahrzeug, umfassend:
eine Aufblaseinrichtung (2) mit einer Vielzahl von Öffnungen (4) zum Leiten eines Gases radial nach außen, und eine Luftsackeinrichtung (1), wie sie in einem der Ansprüche 1 bis 4 beschrieben ist, wobei die Montagebasis die Aufblaseinrichtung (2) umgebend an dieser befestigt ist und das feuerfeste Tuch (10) der Vielzahl der Löcher (4) gegenüberliegend angeordnet ist.

## Revendications

1. Coussin pneumatique (1) pour système de retenue de passager de véhicule, comprenant :
un coussin pneumatique (3) fait de matière souple et ayant une partie périphérique formant une base de montage,
une toile de renfort (7) couvrant au moins une partie de la partie périphérique de ce coussin pneumatique (3), et
un moyen (8) de fixation de cette toile de renfort (7) au coussin pneumatique,
caractérisé par le fait qu'une toile résistant à la flamme (10) est placée à l'intérieur du coussin pneumatique de façon à couvrir le moyen (8) de fixation de la toile de renfort (7) au coussin pneumatique (3).

2. Coussin pneumatique selon la revendication 1, dans lequel la toile de renfort (7) est placée à l'extérieur de la partie périphérique du coussin pneumatique (3) et fixée à celui-ci par des fils cousus (8') traversant la paroi du coussin pneumatique (3), et la toile résistant à la flamme (10) est placée de façon à couvrir la paroi intérieure du coussin pneumatique (3) dans la région des fils cousus (8') afin de couvrir ces derniers.

3. Coussin pneumatique selon l'une des revendications 1 et 2, dans lequel la toile résistant à la flamme (10) est aussi fixée au coussin pneumatique (3) pour former une toile de renfort.

4. Coussin pneumatique selon les revendications 2 et 3, dans lequel la toile résistant à la flamme (10) s'étend au delà de la base de montage sur une plus grande distance que la toile de renfort (7) et est fixée au coussin pneumatique (3) par des fils cousus (8) à des points plus éloignés de la base de montage que les fils cousus (8') qui fixent la toile de renfort.

5. Dispositif à coussin pneumatique pour véhicule, comprenant :
un gonfleur (2) ayant une série de trous (4) destinés à diriger un gaz radialement vers l'extérieur, et un coussin pneumatique (1) selon l'une des revendications 1 à 4 avec la base de montage fixée à ce gonfleur (2) et l'entourant, la toile résistant à la flamme (10) étant placée en face de la série de trous (4).
